# EUROPEAN PATENT APPLICATION

(11) **EP 4 492 531 A2**
(43) Date of publication of application: **15.01.2025**
(21) Application number: 24188139.0
(22) Date of filing: 11.07.2024
(51) Int. Cl.: H01M 10/42, H01M 50/403, H01M 50/446, H01M 50/457, H01M 50/489, H01M 10/052

(54) **HYBRID SEPARATOR AND ELECTROCHEMICAL DEVICE INCLUDING THE SAME**

(30) Priority: 14.07.2023 KR 20230091454
(71) Applicant: SK Innovation Co., Ltd., Seoul 03188 (KR); SK ie technology Co., Ltd., Jongno-gu Seoul 03188 (KR)
(72) Inventor: LEE, Chang Hee, 34124 Daejeon (KR); KIM, Jun Hyung, 34124 Daejeon (KR); AHN, Jun Hwan, 34124 Daejeon (KR); JI, Sang Yoon, 34124 Daejeon (KR)
(74) Representative: Prüfer & Partner mbB Patentanwälte · Rechtsanwälte

(57) **Abstract**

Provided are a hybrid separator and an electrochemical device including the same. More specifically, an electrochemical device having improved flame retardancy and safety, a hybrid separator which is easily stored and transported, and an electrochemical device including the same are provided.

More specifically, a hybrid separator of a new concept including a functional coating layer formed in a solid state at room temperature is provided, in which when an electrode and the hybrid separator facing each other are heated in order to manufacture a battery, the functional coating layer in a solid state applied on both surfaces of the separator is melted and mixed to satisfy specific content ratio conditions, so that phase transformation into a liquid or gel state is allowed.

## Description

### TECHNICAL FIELD

The following disclosure relates to a hybrid separator and an electrochemical device including the same.

### BACKGROUND

Recently, an electrochemical device has been required to have a large capacity so that it may be applied to electric vehicles, energy storage devices, and the like. Since a larger capacity of the electrochemical device is required, the higher the fire and explosion risks are, and heat resistance and safety of the electrochemical device have been required to a greater extent. In addition, since internal impregnation of an electrolyte becomes more difficult during an electrolyte injection process due to progress toward a larger capacity, impregnation rate improvement and manufacturing process simplification of an electrolyte are required.

A common electrochemical device is manufactured by wrapping cells formed of a negative electrode, a positive electrode, and a separator disposed between the negative electrode and the positive electrode into a cylinder or stacking the cells, inserting the cells into a pouch, and injecting a liquid electrolyte into the pouch. An electrolyte allows charges between electrodes to move well, and generally includes a solvent and a salt.

Since a separator applied to an electrochemical device may cause internal short circuit resulting from shrinkage at a high temperature or penetration due to external impact, and there is a risk of fire due to the internal short circuit, the heat stability and penetration safety of the separator are problems which should be improved for user's safety. In particular, since a lithium secondary battery uses an electrolyte including a nonaqueous organic solvent having a low flash point as a main component, there is a possibility of overcharging, or ignition and explosion when impact or penetration occur, and thus, improvement thereon is required.

Recently, attempts are made to secure penetration safety by applying a high heat resistant separator which has increased heat resistance. To this end, a method of improving battery safety through improvement of thermal safety of a separator by forming a coating layer including an organic material on a conventional polyolefin-based film is also used.

### SUMMARY

An embodiment of the present disclosure is directed to providing a separator including a porous substrate and any one or two or more solid phase coating layers selected from a nitrile-based compound and a lithium salt formed at different composition ratios on each surface of the porous substrate, wherein the separator may be wound during transport.

Another embodiment of the present disclosure is directed to providing a novel hybrid separator which may act as an electrolyte by phase transformation into a liquid state or a gel state, due to the mole ratio of each component of the coating layer which is changed differently from that of the solid state coating layer, by melting and mixing a coating layer formed on both surfaces of the porous substrate by heat in a process of facing an electrode and heat pressing, when an electrochemical device is assembled using the separator.

Accordingly, a novel hybrid separator which may not require injection of a separate liquid electrolyte during manufacture of a battery may be provided, and by adopting the hybrid separator, an electrochemical device which allows improvement of an electrolyte solution impregnation rate and simplification of a manufacturing process is intended to be provided. That is, a battery as an electrochemical device which allows improvement of an electrolyte solution impregnation rate and simplification of a manufacturing process, and a manufacturing method thereof are intended to be provided.

Still another embodiment of the present disclosure is directed to providing an electrochemical device of which the ignition and explosion may be prevented using the hybrid separator according to an exemplary embodiment. A hybrid separator which may improve heat resistance and safety of an electrochemical device, more specifically a lithium secondary battery and an electrochemical device using the same are intended to be provided.

In addition, a novel hybrid separator which may prevent electrical short circuit and resulting ignition and explosion during a nail penetration evaluation not only in a charged state of less than 100% but also in a 100% charged state, and an electrochemical device including the same are intended to be provided.

In addition, a higher battery capacity is intended to be provided when a battery having the same volume is manufactured.

The hybrid separator and the electrochemical device including the same of the present disclosure may be widely applied to the green technology field such as electric vehicles, battery charging stations, and additionally, solar power generations and wind power generations using batteries. In addition, the hybrid separator and the electrochemical device including the same of the present disclosure may be used in eco-friendly electric vehicles, hybrid vehicles, and the like for suppressing air pollution and greenhouse gas emission to prevent climate change.

In one general aspect, a hybrid separator includes: a porous substrate, a solid phase first functional layer comprising, in particular formed by applying, a nitrile-based compound alone or a mixture of the nitrile-based compound and a lithium salt on one surface of the porous substrate, and a solid phase second functional layer comprising, in particular formed by applying, the mixture of the nitrile-based compound and the lithium salt on the other surface of the porous substrate, wherein the first functional layer and the second functional layer have different contents of the lithium salt.

In an exemplary embodiment, the meaning of "having different contents of a lithium salt" includes the case in which the first functional layer does not include the lithium salt, that is, has a lithium salt content of 0.

For example, in a first exemplary embodiment, the first functional layer may be formed of the nitrile-based compound alone without including the lithium salt, and the second functional layer may be formed of the mixture of the nitrile-based compound and the lithium salt. In a second exemplary embodiment, the first functional layer and the second functional layer may be formed of the mixture of the nitrile-based compound and the lithium salt, respectively, and the contents of the lithium salt included in the first functional layer and the second functional layer may be different from each other.

In an exemplary embodiment, the first functional layer and the second functional layer may cover the surface and pores of the porous substrate; for example the first functional layer and the second functional layer respectively may be formed by coateing and/or filling the surface and pores of the porous substrate.

In an exemplary embodiment, the first functional layer and the second functional layer are a solid phase at room temperature, but when heated, the solid phase first functional layer and second functional layer may be melted, mixed, and phase transformed to maintain a liquid phase or a gel phase at room temperature.

In an exemplary embodiment, the liquid phase may have a haze of 50% or less, the gel phase may have a haze of more than 50% and less than 90%, and the solid phase may have a haze of 90% or more. The haze is measured as follows: A phase transformed sample is placed in a quartz cell of 10×40×50 mm and allowed to stand at room temperature for 12 hours, and haze is measured at a distance of 100 mm vertically from a halogen lamp under the conditions of a rated voltage of 12 V and a power consumption of 50 W, using a colorimeter (COH400, Nippon denshoku),

In an exemplary embodiment, the nitrile-based compound may be a solid at room temperature, or when mixed with the lithium salt, may be present as a solid at room temperature, and may be a compound including at least one or more -C≡N functional groups.

In an exemplary embodiment, the nitrile-based compound which is a solid at room temperature may be any one or a mixture of two or more selected from succinonitrile (SN), (3,4-dimethoxyphenyl)acetonitrile, 2-(4-bromo-2-methoxyphenyl)acetonitrile, 2-fluorophenylacetonitrile, 2-chloro-4-fluorophenylacetonitrile, and 4-fluorophenylacetonitrile.

The nitrile-based compound which may be present as a solid at room temperature when mixed with the lithium salt may be any one or a mixture of two or more selected from glutaronitrile, adiponitrile, pymellonitrile, suberonitrile, nonandinitrile, sebaconitrile, undecandinitrile, dodecandinitrile, and the like, but is not limited thereto.

In an exemplary embodiment, the lithium salt may be any one or two or more selected from the group consisting of (CF₃SO₂)₂NLi (LiTFSI), (SO₂F)₂NLi (LiFSI), (C₂F₅SO₂)₂NLi, LiCl, LiBr, LiI, LiClO₄, LiBF₄, LiB₁₀Cl₁₀, LiPF₆, LiCF₃SO₃, LiCF₃CO₂, LiC₄BO₈, LiAsF₆, LiSbF₆, LiAlCl₄, CH₃SO₃Li, (CF₃SO₂)₃CLi, LiBF₂ (C₂O₄), LiAlO₂, LiN(CₓF₂ₓ₊₁SO₂)(C_{y}F_{2y+1}SO₂), and the like, wherein x and y are natural numbers, but is not limited thereto.

In an exemplary embodiment, the total content of the nitrile-based compound used in the first functional layer and the second functional layer may be the content at which the liquid phase or the gel phase is maintained at room temperature when mixed with the lithium salt.

In an exemplary embodiment, the nitrile-based compound may be succinonitrile, the lithium salt may be LiFSI, the total content of the succinonitrile used in the first functional layer and the second functional layer may be at a weight ratio of 2 to 7 with respect to LiFSI, but is not limited thereto.

In an exemplary embodiment, the first functional layer may be formed of succinonitrile alone, and the second functional layer may be formed of a mixture in which LiFSI:succinonitrile is mixed at a weight ratio of 1:1 to 1.5 or 1:10, but the present disclosure is not limited thereto.

In an exemplary embodiment, an application amount of the first functional layer and the second functional layer may be adjusted so that the total content of the succinonitrile used in the first functional layer and the second functional layer is at a weight ratio of 2 to 7 with respect to LiFSI, but is not limited thereto.

In an exemplary embodiment, the first functional layer may be formed by impregnation on the first surface of the porous substrate and be formed with a loading amount of 0.5 to 10 g/m², but is not limited thereto. The second functional layer may be formed by impregnation on the second surface of the porous substrate and be formed with a loading amount of 0.5 to 10 g/m², but is not limited thereto.

In an exemplary embodiment, the porous substrate may be any one or a laminate of two or more selected from the group consisting of a porous film, a non-woven fabric, and a woven fabric, but is not limited thereto.

In an exemplary embodiment, the porous substrate may have a thickness of 1 to 80 µm, but is not limited thereto.

In an exemplary embodiment, the first functional layer and the second functional layer may further include less than 5 wt% of a carbonate-based additive, but are not limited thereto.

In another general aspect, an electrochemical device includes: the hybrid separator of the exemplary embodiment, wherein the hybrid separator is disposed and heated, thereby liquefying, mixing, and phase transforming a first functional layer and a second functional layer included in the hybrid separator.,The functional layers are present as a liquid phase or a gel phase transformation layer at room temperature.

In an exemplary embodiment, the hybrid separator is disposed between a positive electrode and a negative electrode and heated, thereby liquefying, mixing, and phase transforming the first functional layer and the second functional layer included in the hybrid separator, so that the functional layers may be present as a liquid phase or gel phase transformation layer at room temperature. Though it is described that the separator may be disposed between the negative electrode and the positive electrode as a common electrochemical device, the present disclosure is not necessarily limited thereto, and the laminated structure is not limited as long as it may act as the separator.

In an exemplary embodiment, the electrochemical device may have a capacity of 50 mAh or more, but is not limited thereto.

In still general aspect, a method of manufacturing a hybrid separator includes: applying a solid phase nitrile-based compound alone or a solid phase mixture of the nitrile-based compound and a lithium salt in a state of being heated and melted on a first surface of a porous substrate to impregnate it on the surface and into pores, and performing cooling to form a solid phase first functional layer; and applying the solid phase mixture of the nitrile-based compound and the lithium salt in a state of being heated and melted on a second surface of the porous substrate to impregnate it on the surface and into pores, and performing cooling to form a solid phase second functional layer, wherein the first functional layer and the second functional layer have different contents of the lithium salt.

In a still further general aspect, a method of manufacturing an electrochemical device (such as a battery and in particular a secondary battery comprising an anode and a cathode besides the separator) uses the hybrid separator according to the present disclosure, wherein the first functional layer and the second functional layer are heated to melt the solid phase first functional layer and second functional layer, and upon cooling obtain and maintain a liquid phase or a gel phase at room temperature.

In an exemplary embodiment, the first functional layer and the second functional layer are a solid phase at room temperature, but when heated, the solid phase first functional layer and second functional layer may be melted, mixed, and phase transformed to maintain a liquid phase or a gel phase even at room temperature.

In an exemplary embodiment, the first functional layer and the second functional layer may further include less than 5 wt% of a carbonate-based additive, but are not limited thereto.

In an exemplary embodiment, the nitrile-based compound may be succinonitrile, the lithium salt may be LiFSI, the total content of the succinonitrile used in the first functional layer and the second functional layer may be at a weight ratio of 2 to 7 with respect to LiFSI, but is not limited thereto.

Other features and aspects will be apparent from the following detailed description, the drawings, and the claims.

### BRIEF DESCRIPTION OF THE DRAWINGS

FIG. 1 is a photograph in which states at room temperature (RT) depending on a mixing ratio of succinonitrile (SN) and a lithium salt (LiFSI) which are coating materials to be coated on a separator according to an exemplary embodiment were observed.
FIG. 2 is a cross-sectional diagram showing an exemplary embodiment of a hybrid separator, and illustrates a cross-section of the hybrid separator on which a first functional layer and a second functional layer are formed.

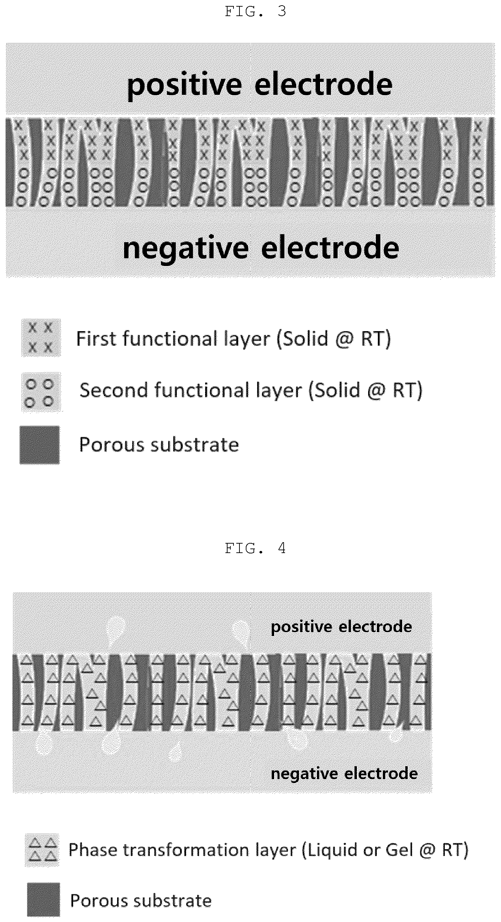

FIG. 3 illustrates an exemplary embodiment of battery manufacturing, and is a cross-sectional diagram showing that the hybrid separator according to an exemplary embodiment is disposed between a negative electrode and a positive electrode.
FIG. 4 illustrates an exemplary embodiment of battery manufacturing, in which the hybrid separator according to an exemplary embodiment is disposed between a negative electrode and a positive electrode and then heated to melt and mix a first functional layer and a second functional layer, and then a phase transformation layer which is present as a liquid phase or semi-solid gel phase at room temperature (RT) is formed.
FIG. 5 illustrates explosion and non-explosion during a nail penetration experiment of a battery.

### DETAILED DESCRIPTION OF EMBODIMENTS

Hereinafter, embodiments of the present disclosure will be described in detail

Unless otherwise defined, all technical terms and scientific terms have the same meanings as those commonly understood by a person skilled in the art to which the present disclosure pertains. The terms used herein are only for effectively describing a certain specific example, and are not intended to limit the present disclosure.

In addition, the singular form used in the specification and claims appended thereto may be intended to include a plural form also, unless otherwise indicated in the context.

In addition, unless particularly described to the contrary, "comprising" any elements will be understood to imply further inclusion of other elements rather than the exclusion of any other elements.

In addition, unless particularly defined, when a layer or member is positioned "on" another layer or member, not only the layer or member is in contact with another layer or member, but also another layer or member exists between two layers or two members.

In addition, when unique manufacture and material allowable errors are suggested in the mentioned meaning, "about", "substantially", and the like are used in the meaning of the numerical value or in the meaning close to the numerical value, and are used to prevent the disclosure mentioning a correct or absolute numerical value for better understanding of the present disclosure from being unfairly used by an unconscionable infringer.

In the present disclosure, "room temperature" may refer to a common temperature in a process of storing and transporting a separator and an electrochemical device, and for example, may be 20 to 35°C.

In the present disclosure, "heated" in "when heated, the solid phase first functional layer and second functional layer being melted, mixed, and phase transformed" refers to a higher temperature than the room temperature. That is, it means a temperature which causes phase transformation in a solid phase by heating using a separate heating means. For example, it may be room temperature or higher, 35°C or higher, 40°C or higher, 50°C or higher, or 60 to 80°C.

An exemplary embodiment of the present disclosure provides a hybrid separator including: a porous substrate, a solid phase first functional layer comprising, in particular formed by applying, a nitrile-based compound alone or a mixture of the nitrile-based compound and a lithium salt on one surface of the porous substrate, and a solid phase second functional layer comprising, in particular formed by applying, the mixture of the nitrile-based compound and the lithium salt on the other surface of the porous substrate, wherein the first functional layer and the second functional layer have different contents of the lithium salt. In an exemplary embodiment, the contents of the lithium salt being different from each other includes the meaning that the first functional layer includes no lithium salt.

For example, in a first exemplary embodiment, the first functional layer may be formed of the nitrile-based compound alone without including the lithium salt, and the second functional layer may be formed of the mixture of the nitrile-based compound and the lithium salt. In a second exemplary embodiment, the first functional layer and the second functional layer may be formed of the mixture of the nitrile-based compound and the lithium salt, respectively, and the contents of the lithium salt included in the first functional layer and the second functional layer may be different from each other.

In an exemplary embodiment, the first functional layer and the second functional layer may cover, in particular be formed by filling, the surface and pores of the porous substrate.

In an exemplary embodiment, the first functional layer and the second functional layer may be formed in a range of 50% or more, 60% or more, 70% or more, 80% or more, 85% or more, 90% or more, 95% or more, or substantially 100%, with respect to the total area of the porous substrate, and may have an area between the numerical values. For example, they may be formed in 80 to 100%, and formed substantially over the entire area, but are not limited thereto.

In an exemplary embodiment, the first functional layer and the second functional layer may be a solid phase at room temperature, for example, at 20 to 35°C, but when they are heated to a temperature higher than room temperature, the solid phase first functional layer and second functional layer are melted and mixed with each other to change the compositions of the components of each layer, so that the layers may maintain the liquid phase or the gel phase without phase transformation into a solid phase even at low room temperature again. Herein, the heating temperature is not limited as long as the coating layers coated on both surfaces are melted and mixed with other at the temperature without affecting the pores of the separator of the present disclosure, and may be, for example, higher than 35°C, 40°C or higher, 35 to 80°C, 40 to 80°C, or 60 to 80°C.

The liquid phase, the gel phase, or the solid phase may be evaluated with the naked eye, but may be measured by the following method. That is, when a phase transformed sample is placed in a quartz cell of 10×40×50 mm and allowed to stand at room temperature for 12 hours, and haze is measured at a distance of 100 mm vertically from a halogen lamp under the conditions of a rated voltage of 12 V and a power consumption of 50 W, using a colorimeter (COH400, Nippon denshoku), the liquid phase may have a haze of 50% or less or 0 to 50%, the gel phase may have a haze of more than 50% and less than 90%, and the solid phase may have a haze of 90 % or more or 90 to 100%.

Hereinafter, each component of the present disclosure will be described in more detail.

### [Nitrile-based compound]

In an exemplary embodiment, the nitrile-based compound has a solid form at room temperature, and refers to a compound including at least one or more -C≡N functional groups. In addition, a nitrile-based compound which is not a solid at room temperature alone, but when mixed with a lithium salt, may be present as a solid at room temperature may be used without limitation.

Though the nitrile-based compound is not particularly limited as long as it has a melting point of higher than 35°C and lower than 40°C, the example thereof may be any one or a mixture of two or more selected from succinonitrile (SN), (3,4-dimethoxyphenyl)acetonitrile, 2-(4-bromo-2-methoxyphenyl)acetonitrile, 2-fluorophenylacetonitrile, 2-chloro-4-fluorophenylacetonitrile, 4-fluorophenylacetonitrile, and the like, and the compound may be replaced with other components as long as it is not beyond the scope of the present disclosure. Specifically, succinonitrile (SN) may be used from the perspective for imparting flame retardancy and providing a battery having a higher capacity at room temperature.

Otherwise, the nitrile-based compound may be a compound which is not a solid, but may be present as a solid at room temperature when mixed with a lithium salt, and for example, may be a compound including at least one -C≡N groups. For example, it may be any one or a mixture of two or more selected from glutaronitrile, adiponitrile, pymellonitrile, suberonitrile, nonandinitrile, sebaconitrile, undecandinitrile, dodecandinitrile, and the like, and may be replaced with other components as long as it is not beyond the scope of the present disclosure.

The nitrile-based compound may be included in the first functional layer and the second functional layer of the hybrid separator of the present disclosure as a main coating component, and except the case in which the nitrile-based compound is used 100% as any one coating layer of the two functional layers, when the nitrile-based compound is mixed with the lithium salt, the compound may be 50 wt% or more, 55 wt% or more, 60 wt% or more, 65 wt% or more, 70 wt% or more, 75 wt% or more, 80 wt% or more, 85 wt% or more, 90 wt% or more and 99.9 wt% or less, 95 wt% or less, 90 wt% or less, or any value between the described numerical values, based on the total weight of a coating solution for forming the first functional layer and the second functional layer. For example, the range may be 50 to 99.9 wt%, 55 to 99.9 wt%, or 60 to 90 wt%.

Within the content range, flame retardancy is excellent, the first functional layer and the second functional layer formed on both surfaces of the separator remain in a solid state at room temperature and are easy to be transported.

### [Ionizable lithium salt]

The lithium salt may be used without limitation as long as it is an ionizable lithium salt. For example, it may be any one or two or more selected from the group consisting of (CF₃SO₂)₂NLi (LiTFSI), (SO₂F)₂NLi (LiFSI), (C₂F₅SO₂)₂NLi, LiCl, LiBr, LiI, LiClO₄, LiBF₄, LiB₁₀Cl₁₀, LiPF₆, LiCF₃SO₃, LiCF₃CO₂, LiC₄BO₈, LiAsF₆, LiSbF₆, LiAlCl₄, CH₃SO₃Li, (CF₃SO₂)₃CLi, LiBF₂(C₂O₄), LiAlO₂, and LiN(CₓF₂ₓ₊₁SO₂)(C_{y}F_{2y+1}SO₂), and the like, wherein x and y are natural number, but is not limited thereto.

In addition, the lithium salt may include an imide-based lithium salt such as LiFSI. By including the imide-based lithium salt, a robust and thin SEI film may be formed on a negative electrode.

As for the content of the lithium salt, the lithium salt is mixed with the nitrile-based compound in each functional layer formed on each surface of the porous substrate and may be present as a solid phase at 10 to 35°C, but when the hybrid separator is heated to melt and mix each of the functional layers, the lithium salt does not maintain a solid state any more even at, for example, 10 to 35°C and the content of the lithium salt is not limited as long as the lithium salt is present as a liquid phase or a gel phase.

In an exemplary embodiment, the content of the lithium salt may be less than 50 wt%, 49 wt% or less, 45 wt% or less, 40 wt% or less, 35 wt% or less, 30 wt% or less, 25 or less, 20 or less, 15 or less and 10 or more, or any value between the numerical values described above, based on the total weight of the coating solution for forming the first functional layer and the second functional layer. For example, it may be 10 to 49 or 10 to 45 wt%.

In the present disclosure, from the perspective of application as a solid phase and then phase transformation into a liquid phase or gel phase by heating after battery manufacturing, as the coating layer formed on each surface of the porous substrate, the total content of the nitrile-based compound used in the first functional layer and the second functional layer may be included as the content at which the liquid phase or the gel phase is maintained at room temperature when mixed with the lithium salt.

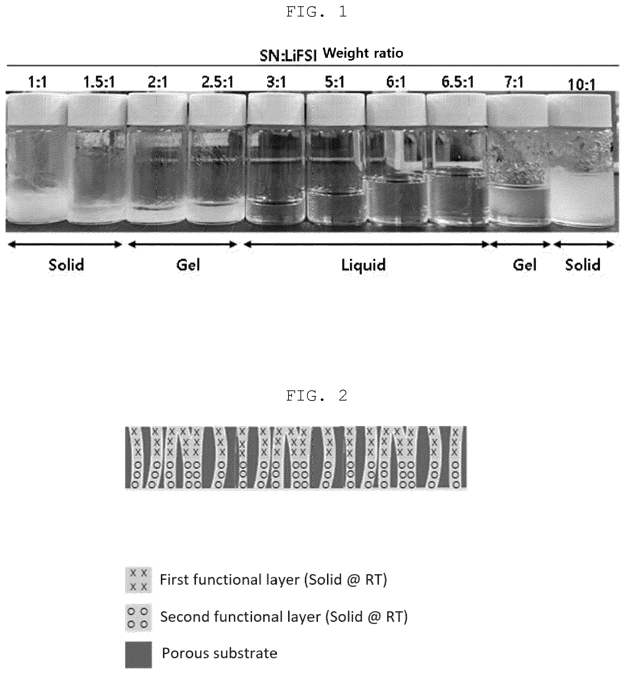

In an exemplary embodiment, though not limited thereto, the nitrile-based compound may be succinonitrile, and the lithium salt may be LiFSI. The succinonitrile and LiFSI show a liquid phase, a gel phase, or a solid phase at room temperature depending on a mixing ratio. Regarding this, the phase depending on each content ratio is illustrated in more detail in the preparation example described later, and the photograph of each state is shown in FIG. 1.

Hereinafter, in an exemplary embodiment, the case in which succinonitrile is used in the first functional layer and the second functional layer as the nitrile-based compound and LiFSI is used as the lithium salt will be described as an example.

In an exemplary embodiment, the total content of the succinonitrile used in the first functional layer and the second functional layer is at a weight ratio of 2 to 7 times the total content of LiFSI, and though is not limited thereto, as shown in FIG. 1, the succinonitrile may remain as a liquid phase or a gel phase after phase transformation within the range. In addition, in the process of melting and mixing by heating after battery manufacturing, phase transformation is allowed in a completely liquid phase or gel phase even at room temperature. By maintaining the liquid phase or the gel phase at room temperature, the capacity of the battery may be secured at room temperature. In addition, a battery having excellent flame retardancy and heat resistance may be provided within the range.

As an example, as a coating layer formed on each surface of the hybrid separator, the first functional layer is formed of succinonitrile alone, and the second functional layer may be formed of a mixture of LiFSI:succinonitrile at a weight ratio of 1:1 to 1.5 or 1:10. Otherwise, an application amount of the first functional layer and the second functional layer may be formed by adjusting the ratio so that the total content of the succinonitrile used in the first functional layer and the second functional layer is at a weight ratio of 2 to 7 with respect to LiFSI. Within the range, the coating layer of the hybrid separator remains as a solid phase and is easily transported, and is melted and mixed with each other by heating during battery manufacturing to be phase transformed into a liquid phase or a gel phase, but is not limited thereto.

In an exemplary embodiment, the first functional layer may be formed by impregnation on the surface or into a part or all of the pores inside of the porous substrate, and may be, for example, formed with a loading of 0.5 to 10 g/m², but is not limited thereto. The second functional layer may be formed by impregnation on the surface or a part or all of the pores inside of the porous substrate, and for example, may be formed with a loading of 0.5 to 10 g/m², but is not limited thereto. Herein, the application amounts of the first functional layer and the second functional layer may be the same or different from each other, and the application amount of each layer or the content of the lithium salt may be adjusted. In an exemplary embodiment, the application amount may be adjusted to a ratio so that the total content of the succinonitrile used in the first functional layer and the second functional layer is at a weight ratio of 2 to 7 with respect to the lithium salt, for example, LiFSI.

In an exemplary embodiment, since the lithium salt which is ionizable with succinonitrile (SN) is phase transformed from a solid phase to a liquid phase or a gel phase form by mixing with each other, and also there is a trans isomer to a central C-C bond (trans-gauche isomerism) at a melting temperature of SN or lower, the lithium salt has ion conduction behavior. Therefore, it may act as an electrolyte. Herein, the transisomer contributes to lattice defect worsening and activation energy lowering for ion conductivity, thereby increasing ion mobility.

### [Additional additive]

In an exemplary embodiment, the first functional layer and the second functional layer may further include a carbonate-based additive. The carbonate-based additive improves applicability since the nitrile-based compound is a solid state at room temperature, further improves mixability between the nitrile-based compound and the lithium salt, and may be used from the perspective of more effective formation of a solid electrolyte interphase (SEI) layer. Accordingly, in general, it may be used at a smaller content as compared with the content used as a solvent of a liquid electrolyte. For example, it may be included at less than 5 wt%, 0.1 or more and less than 5 wt%, or 0.1 to 0.49 wt%, based on the total weight of the coating solution for forming the first functional layer and the second functional layer. When the content of the carbonate-based solvent is more than the range, it may be difficult to form the first functional layer and the second functional layer on the porous substrate as a solid phase. In addition, from the perspective of allowing the separator to be wound on a roll after its manufacture and be stored and transported, it is preferred to use the above content range.

The carbonate-based additive may be, for example, any one or a mixture of two or more selected from the group consisting of fluoroethylene carbonate (FEC), vinylene carbonate (VC), vinyl ethylene carbonate (VEC), ethylene carbonate (EC), propylene carbonate (PC), di-fluoroethylene carbonate (DiFEC), and the like, and may be replaced with other components as long as it is not beyond the scope of the present disclosure.

In addition, if necessary, an additive which is added to a liquid electrolyte commonly used in the art, may be further included. The content may be 5 or less of the total functional layer, but is not limited as long as the effect of the present disclosure is achieved. Since the additive is not particularly limited as long as it is a known additive included in a liquid electrolyte, further description thereof will be omitted herein.

### [Porous substrate]

In an exemplary embodiment, the porous substrate may be any one or a laminate of two or more selected from the group consisting of a porous film, a non-woven fabric, and a woven fabric in a polymer form such as polyolefin.

In addition, the porous substrate may be a ceramic-coated porous substrate on which a ceramic layer having pores formed by connecting inorganic particles on one or both surfaces of a polymer type porous film such as polyolefin, polyester, polyimide, polyamide, polyimideamide, polyester, polysulfone, polyketone, polyurethane, and polyether, or a film or a sheet form formed of a non-woven fabric and a woven-fabric is laminated, but is not limited thereto. As an example, the porous substrate may be a polyimide non-woven fabric, but is not limited thereto.

In an exemplary embodiment, the porous substrate may be surface-treated for further improving applicability and impregnability of a composition for forming the first functional layer and the second functional layer. For example, it may be hydrophilically treated by means such as plasma and arc discharge in the presence of oxygen or air, but is not limited thereto.

The porous substrate may have a porosity in the range of ..., but is not limited thereto. The porosity means an original porosity before applying the coating solutions. The average pore size measurement was conducted by delaminating the polyethylene layer from the multi-layered membrane and measuring it using a porometer (PMI's CFP-1500-AEL) following ASTM F316-03 by the half-dry method. For pore size measurement, Galwick liquid (surface tension: 15.9 dyne/cm) provided by PMI was used.

The porous substrate may have a thickness of 1 to 80 um, but is not limited thereto. The thickness means an original thickness before applying the coating solutions. The thickness of the porous substrate was measured using a contact-type micrometer (Mitutoyo, Japan) by measuring the thickness of a separator with 10 layers of the porous substrate and then dividing the total thickness by 10 to obtain the average value.

### [Method of manufacturing hybrid separator]

Hereinafter, the method of manufacturing a hybrid separator of the present disclosure will be described with an example.

In an exemplary embodiment, the method includes: applying a solid phase nitrile-based compound alone or a solid phase mixture of the nitrile-based compound and a lithium salt in a state of being heated and melted on a first surface of a porous substrate to impregnate it on the surface and into pores, and performing cooling to form a solid phase first functional layer in which the mixture is impregnated on the surface or into pores inside the first surface; and
applying the solid phase mixture of the nitrile-based compound and the lithium salt in a state of being heated and melted on a second surface of the porous substrate, and performing cooling to form a solid phase second functional layer in which the mixture is impregnated on the surface and into the pores of the second surface,
wherein the first functional layer and the second functional layer have different contents of the lithium salt.

In an exemplary embodiment, the first functional layer and the second functional layer are a solid phase at room temperature, but when heated, the solid phase first functional layer and second functional layer may be melted, mixed, and phase transformed into a phase transformation layer, and remain as a liquid phase or a gel phase even at room temperature.

In an exemplary embodiment, the first functional layer and the second functional layer may further include a carbonate-based additive, and may be included at less than 5 wt%, but is not limited thereto.

In addition, the first functional layer and the second functional layer as the application layer may include substantially no solvent, and from the perspective for further facilitating applicability, the layers may further include less than 5 of the solvent. The solvent may be a carbonate-based solvent.

When the first functional layer and the second functional layer are applied, a melting temperature of the mixture may be, for example, higher than 35°C, 40°C or higher, or 60 to 80°C. In addition, the application may be performed by heating to the temperature. The application method is not limited as long as it is commonly used in the art, and application or impregnation is also allowed. In addition, the application may be performed on the entire surface of the porous substrate, and may be performed in a range of 50% or more, 60% or more, 70% or more, 80% or more, 85% or more, 90% or more, 95% or more, or substantially 100% with respect to the area of the porous substrate, or in an application area between the numerical values, preferably in 80 to 100% of the area, but is not limited thereto.

Since the first functional layer and the second functional layer are present in a solid state at room temperature, the hybrid separator manufactured by the method described above may be wound, and stored and transported.

In addition, during battery manufacturing or in a process of disposing the hybrid separator between a negative electrode and a positive electrode and performing heat pressing to manufacture a battery, the first functional layer and the second functional layer may be melted, and also mixed with each other and phase transformed. The functional layers coated on each surface of the porous substrate are present as a solid phase, and then phase transformed by melt mixing, and after the phase transformation, it does not return to a solid phase even with cooling to room temperature and remains as a liquid phase or a gel phase. The heating temperature may be, for example, higher than 35°C, 40°C or higher, 50°C or higher, 60°C or higher and 80°C or lower, or a temperature between them. Accordingly, a process of injecting a separate liquid electrolyte may not be needed, and as phase transformation from a solid state to a liquid phase or a gel phase proceeds, impregnability and adhesiveness to an active material of an electrode may be improved and excellent ion conductivity may be provided. In addition, a battery having excellent flame retardancy may be provided, and, in particular, a very safe battery which does not cause ignition even at a 100% charged state in a penetration evaluation may be provided.

### [Electrochemical device]

The electrochemical device according to an exemplary embodiment of the present disclosure may be a lithium secondary battery, but is not limited thereto.

In an exemplary embodiment, an electrochemical device includes the hybrid separator according to an exemplary embodiment of the present disclosure, in which the hybrid separator is disposed between a positive electrode and a negative electrode and heated, whereby the first functional layer and the second functional layer included in the hybrid separator are mixed with each other and phase transformed so that they may be present as a liquid phase or a gel phase transformation layer even at room temperature. Accordingly, a separate electrolyte may not be injected into the electrochemical device, but the electrolyte is not excluded.

In an exemplary embodiment, the electrochemical device may have a capacity of 50 mAh or more, 55 mAh or more, 60 mAh or more, 65 mAh or more, 70 mAh or more, 75 mAh or more, or 80 mAh or more, but is not limited thereto.

The positive electrode may include a positive electrode current collector and a positive electrode mixture layer disposed on at least one surface of the positive electrode current collector.

The positive electrode current collector may include stainless steel, carbon, nickel, aluminum, or aluminum which is surface treated with silver, titanium, or an alloy thereof. Though the positive electrode current collector is not limited thereto, it may be 10 to 50 µm.

The positive electrode mixture layer may include a positive electrode active material. The positive electrode active material may include a compound which may reversibly intercalate and deintercalate lithium ions.

According to exemplary embodiments, the positive electrode active material may include a lithium-nickel metal oxide. The lithium-nickel metal oxide may further include at least one of cobalt (Co), manganese (Mn), and aluminum (Al) .

In some exemplary embodiments, the positive electrode active material or the lithium-nickel metal oxide may include a layered structure or a crystal structure represented by the following Chemical Formula 1:

[Chemical Formula 1] LiₓNiₐM_{b}O_{2+z}

wherein 0.9≤x≤1.2, 0.6≤a≤0.99, 0.01≤b≤0.4, and - 0.5≤z≤0.1. As described above, M may include Co, Mn, and/or Al.

The chemical structure represented by Chemical Formula 1 shows a bonding relationship included in the layered structure or the crystal structure of a positive electrode active material, and it does not mean that other additional elements are excluded. For example, M includes Co and/or Mn, and Co and/or Mn may be provided as a main active element of the positive electrode active material with Ni. Chemical Formula 1 is provided for expressing the bonding relationship of the main active elements, and should be understood as a formula covering introduction of an additional element and substitution.

In an exemplary embodiment, auxiliary elements for adding the main active elements to enhance chemical stability of the positive electrode active material or the layered structure/crystal structure may be further included. The auxiliary element may be incorporated into the layered structure/crystal structure and form a bond, and in this case also, should be understood to be included in the range of the chemical structure represented by Chemical Formula 1.

The auxiliary element may include, for example, at least one of Na, Mg, Ca, Y, Ti, Hf, V, Nb, Ta, Cr, Mo, W, Fe, Cu, Ag, Zn, B, Al, Ga, C, Si, Sn, Sr, Ba, Ra, P, or Zr. The auxiliary element may act as, for example, an auxiliary active element which contributes to the capacity/output activity of the positive electrode active material with Co or Mn, like Al.

For example, the positive electrode active material or the lithium-nickel metal oxide may include a layered structure or a crystal structure represented by the following Chemical Formula 1-1:

[Chemical Formula 1-1] LiₓNiₐM1_{b1}M2_{b2}O_{2+z}

wherein M1 includes Co, Mn, and/or Al. M2 may further include the auxiliary elements described above. In Chemical Formula 1-1, 0.9≤x≤1.2, 0.6≤a≤0.99, 0.01≤b1+b2≤0.4, and - 0.5≤z≤0.1.

The positive electrode active material may further include a coating element or a doping element. For example, the auxiliary elements described above and elements substantially identical or similar thereto may be used as a coating element or a doping element. For example, among the elements described above, a single or a combination of two or more is used as a coating element or a doping element.

The coating element or the doping element may be present on the surface of the lithium-nickel metal oxide particles, or penetrated through the surface of the lithium-nickel metal composite oxide particles and included in the combined structure represented by Chemical Formula 1 or Chemical Formula 1-1.

The positive electrode active material may include a nickel-cobalt-manganese (NCM)-based lithium oxide. In this case, an NCM-based lithium oxide having an increased nickel content may be used.

Ni may be provided as a transition metal related to the output and the capacity of a lithium secondary battery. Therefore, as described above, since a high-capacity (high-Ni) composition is adopted into the positive electrode active material, a high-capacity positive electrode and a high-capacity lithium secondary battery may be provided.

However, as the content of Ni increases, the long-term preservation stability and the life stability of the positive electrode or the secondary battery may be relatively reduced, and a side reaction with an electrolyte may be increased. However, according to exemplary embodiments, the life stability and the capacity retention properties may be improved by Mn while maintaining the electrical conductivity by including Co.

The content of Ni of the NCM-based lithium oxide (for example, the mole fraction of nickel of the total moles of nickel, cobalt, and manganese) may be 0.6 or more, 0.7 or more, or 0.8 or more. In some exemplary embodiment, the content of Ni may be 0.8 to 0.95, 0.82 to 0.95, 0.83 to 0.95, 0.84 to 0.95, 0.85 to 0.95, or 0.88 to 0.95.

In some exemplary embodiments, the positive electrode active material may include a lithium cobalt oxide-based active material, a lithium manganese oxide-based active material, a lithium nickel oxide-based active material, or a lithium iron phosphate (LFP)-based active material (for example, LiFePO₄).

In some exemplary embodiment, the positive electrode active material may include a Mn-rich-based active material having a chemical structure or crystal structure represented by Chemical Formula 2, a Li rich layered oxide (LLO)/over lithiated oxide (OLO)-based active material, or a Co-less-based active material.

[Chemical Formula 2] p[Li₂MnO₃]·(1-p)[Li_{q}JO₂]

wherein 0<p<1, 0.9≤q≤1.2, and J includes at least one element of Mn, Ni, Co, Fe, Cr, V, Cu, Zn, Ti, Al, Mg, and B.

For example, the positive electrode active material may be mixed into the solvent to prepare a positive electrode slurry. After coating the positive electrode current collector with the positive electrode slurry, drying and rolling may be performed to manufacture a positive electrode mixture layer. The coating process may be performed by a method such as gravure coating, slot die coating, multilayer simultaneous die coating, imprinting, doctor blade coating, dip coating, bar coating, and casting, and is not limited thereto. The positive electrode mixture layer may further include a binder, and may optionally further include a conductive material, a thickening agent, and the like.

A non-limiting example of the solvent used in the preparation of the positive electrode mixture may include N-methyl-2-pyrrolidone (NMP), dimethyl formamide, dimethyl acetamide, N,N-dimethylaminopropylamine, ethylene oxide, tetrahydrofuran, and the like.

The binder may include polyvinylidenefluoride (PVDF), poly(vinylidene fluoride-co-hexafluoropropylene, polyacrylonitrile, polymethylmethacrylate, acrylonitrile butadiene rubber (NBR), polybutadiene rubber (BR), styrene-butadiene rubber (SBR), and the like. In an exemplary embodiment, a PVDF-based binder may be used as a positive electrode binder.

The conductive material may be added for increasing conductivity of the positive electrode mixture layer and/or mobility of lithium ions or electrons. For example, the conductive material may include carbon-based conductive materials such as graphite, carbon black, acetylene black, ketjen black, graphene, carbon nanotubes, vapor-grown carbon fiber (VGCF), and carbon fiber and/or metal-based conductive materials including tin oxide, titanium oxide, perovskite materials such as LaSrCoO₃, LaSrMnO₃, but is not limited thereto.

If necessary, the positive electrode mixture may further include a thickening agent, a dispersing agent. In an exemplary embodiment, the positive electrode mixture may include a thickening agent such as carboxymethyl cellulose (CMC).

The negative electrode may include a negative electrode current collector and a negative electrode mixture layer disposed on at least one surface of the negative electrode current collector.

A non-limiting example of the negative electrode current collector may include a copper foil, a nickel foil, a stainless steel foil, a titanium foil, a nickel foam, a copper foam, a polymer substrate coated with a conductive metal, and the like. The negative electrode current collector is not limited, but may be, for example, 10 to 50 µm.

The positive electrode mixture layer may include a negative electrode active material. As the negative electrode active material, a material capable of adsorbing or desorbing lithium ions may be used. For example, the negative electrode active material may be carbonaceous material such as crystalline carbon, amorphous carbon, carbon composite, and carbon fiber; lithium metal; lithium alloy; a silicon (Si)-containing material, a tin (Sn)-containing material, or the like.

An example of the amorphous carbon may include hard carbon, soft carbon, coke, mesocarbon microbead (MCMB), mesophase pitch-based carbon fiber (MPCF), and others.

An example of the crystalline carbon may include graphite-based carbon such as natural graphite, artificial graphite, graphitized coke, graphitized MCMB, and graphitized MPCF.

The lithium metal may include a pure lithium metal or a lithium metal on which a protective layer is formed for suppressing dendrite growth. In an exemplary embodiment, a lithium metal-containing layer which is deposited or coated on a negative electrode current collector may be used as a negative electrode active material. In an exemplary embodiment, a lithium thin film layer may be used as a negative electrode active material layer.

An element included in the lithium alloy may include aluminum, zinc, bismuth, cadmium, antimony, silicon, lead, tin, gallium, indium, or the like.

The silicon-containing material may provide a more increased capacity characteristic. The silicon-containing material may include Si, SiOₓ (0<x<2), metal-doped SiOₓ (0<x<2), a silicon-carbon composite, and the like. The metal may include lithium and/or magnesium, and the metal-doped SiOₓ (0<x<2) may include metal silicate (method of manufacturing negative electrode).

For example, the negative electrode active material may be mixed into the solvent to prepare a negative electrode slurry. After coating/depositing the negative electrode current collector with the negative electrode slurry, drying and rolling may be performed to manufacture a negative electrode mixture layer. The coating process may be performed by a method such as gravure coating, slot die coating, multilayer simultaneous die coating, imprinting, doctor blade coating, dip coating, bar coating, and casting, and is not limited thereto. The negative electrode mixture layer may further include a binder, and may optionally further include a conductive material, a thickening agent, and the like.

In some exemplary embodiments, the negative electrode may include a negative electrode active material layer in a lithium metal form formed by a deposition/coating process.

A non-limiting example of the solvent for negative electrode mixture may include water, pure water, deionized water, distilled water, ethanol, isopropanol, methanol, acetone, n-propanol, t-butanol, and the like.

As the binder, the conductive material, and the thickening agent, the materials described above which may be used in the manufacture of a positive electrode may be used.

In some exemplary embodiments, a styrene-butadiene rubber (SBR)-based binder, carboxymethyl cellulose (CMC), a polyacrylic acid-based binder, a poly(3,4-ethylenedioxythiophene) (PEDOT)-based binder, and the like may be used as a negative electrode binder.

According to the exemplary embodiments, the positive electrode, the negative electrode, and the hybrid separator may be repeatedly disposed to form an electrode assembly. In some exemplary embodiment, the electrode assembly may be a winding type, a stacking type, a zigzag (z)-folding type, or a stack-folding type.

The electrode assembly may be housed in a case with an electrolyte to define a lithium secondary battery. According to the exemplary embodiments, a nonaqueous electrolyte solution may be used as the electrolyte.

The nonaqueous electrolyte solution includes a lithium salt as an electrolyte and an organic solvent, and the lithium salt is represented by, for example, Li⁺X⁻, and the anion (X⁻) of the lithium salt may be exemplified by F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, (CF₃CF₂SO₂)₂N⁻, and the like.

The organic solvent has sufficient solubility of the lithium salt or the additive, and may include an organic compound having no reactivity in a battery. The organic solvent may include, for example, at least one of carbonate-based solvents, ester-based solvents, ether-based solvents, ketone-based solvents, alcohol-based solvents, and aprotic solvents. An example of the organic solvent may include propylene carbonate (PC), ethylene carbonate (EC), butylene carbonate, diethyl carbonate (DEC), dimethyl carbonate (DMC), ethylmethyl carbonate (EMC), methylpropyl carbonate, ethylpropyl carbonate, dipropyl carbonate, vinylene carbonate, methyl acetate (MA), (ethyl acetate (EA), n-propylacetate (n-PA), 1,1-dimethylethyl acetate (DMEA), methyl propionate (MP), ethylpropionate (EP), fluoroethyl acetate (FEA), difluoroethyl acetate (DFEA), trifluoroethyl acetate (TFEA), dibutyl ether, tetraethylene glycol dimethyl ether (TEGDME), diethylene glycol dimethyl ether (DEGDME), dimethoxyethane, tetrahydrofuran (THF) and 2-methyltetrahydrofuran, ethyl alcohol, isopropyl alcohol, dimethylsulfoxide, acetonitrile, dimethoxyethane, dimethoxyethane, sulfolane, gamma-butyrolactone, and propylene sulfite, and the like. These may be used alone or in combination of two more.

The nonaqueous electrolyte solution may further include an additive. The additive may include, for example, cyclic carbonate-based compounds, fluorine-substituted carbonate-based compounds, sultone-based compounds, cyclic sulfate-based compounds, cyclic sulfite-based compounds, phosphate-based compounds, and borate-based compounds.

The cyclic carbonate-based compound may be vinylene carbonate (VC), vinylethylene carbonate (VEC), or the like.

The fluorine-substituted cyclic carbonate-based compound may include fluoroethylene carbonate (FEC) and the like.

The sultone-based compound may include 1,3-propane sultone, 1,3-propene sultone, 1,4-butane sultone, and the like.

The cyclic sulfate-based compound may include 1,2-ethylene sulfate, 1,2-propylene sulfate, and the like.

The cyclic sulfite-based compound may include ethylene sulfite, butylene sulfite, and the like.

The phosphate-based compound may include lithium difluoro bis-oxalato phosphate, lithium difluoro phosphate, and the like.

The borate-based compound may include lithium bis(oxalate) borate and the like.

Hereinafter, the examples of the present disclosure will be further described with reference to the specific experimental examples. It is apparent to those skilled in the art that the examples and the comparative examples included in the experimental examples only illustrate the present disclosure and do not limit the appended claims, and various modifications and alterations of the examples may be made within the range of the scope and spirit of the present disclosure, and these modifications and alterations will fall within the appended claims.

Hereinafter, the physical properties were evaluated as follows:

### 1) Haze evaluation

A sample was placed in a quartz cell of 10×40×50 mm and allowed to stand at room temperature for 12 hours, and haze was measured at a distance of 100 mm vertically from a halogen lamp (7027 Philips) under the conditions of a rated voltage of 12 V and a power consumption of 50 W, using a colorimeter (COH400, Nippon denshoku).

### 2) Observation of phase at room temperature

The phase was observed at room temperature of 25°C by the naked eye, and each phase is shown in FIG. 1.

### 3) Battery performance evaluation

The temperature of a chamber having the batteries manufactured in the examples and the comparative examples inside was maintained at 25°C, and the batteries were charged with a constant current-constant voltage (CC-CV) of 4.2 V and then discharged down to 2.5 V, as a method of measuring life and resistance at room temperature. The charge/discharge was measured by performing 0.1 C discharge from 4.2 V to 2.5 V and discharge at 0.1 C 20 times. The resistance was the average value of the DC-IR impedance value of each cycle during the charge and discharge process, and the resistance standard deviation was calculated from each value.

### 4) Nail penetration experiment

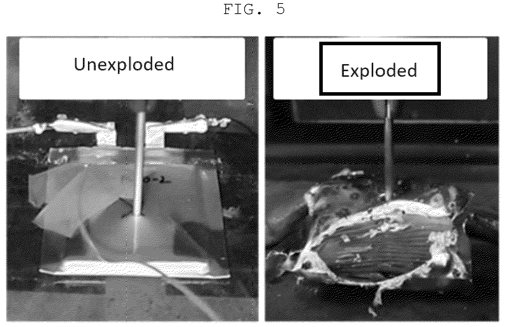

The batteries were manufactured as in the examples and the comparative examples, except that the number of the positive electrode, the negative electrode, and the separator laminated was adjusted to manufacture batteries of 2 Ah. The manufactured batteries were charged to a remaining capacity of 70% to 100% under a voltage of 4.2 V. A nail having a diameter of 3.0 mm was used to penetrate the center of the battery at a speed of 80 mm/s, and it was observed whether ignition occurred. FIG. 5 shows the cases of a non-explosion and an explosion by photographs.

In addition, during the nail penetration experiment, the surface temperature was measured by a method of attaching a probe for measuring temperature on the surface of the electrode.

### 5) Flame retardancy evaluation

A flame was brought into contact with 1 g of the hybrid separator manufactured in the example with a small lighter, and then a time from when ignition started to when ignition ended was measured to evaluate flame retardancy. Thereafter, a 1M LiPF₆ carbonate-based electrolyte in the same amount of the coating layer of the hybrid separator was impregnated in the separator substrate identical to the comparative example to proceed with flame retardancy evaluation. (ignition duration of hybrid separator: 0 sec, ignition duration of the comparative example: 23 sec)

### [Preparation Examples 1 to 10]

Succinonitrile was heated to 60°C and melted, LiFSI was mixed at a weight ratio in the following Table 1, and the phase was observed at room temperature of 25°C.

Haze was measured and is shown in the following Table 1.

**[Table 1]**

| | Succinonitrile:LiFSI (weight ratio) | Observation of phase at room temperature | Haze (%) |
|---|---|---|---|
| Preparation Example 1 | 1:1 | Solid phase | 99.2 |
| Preparation Example 2 | 1.5:1 | Solid phase | 98.5 |
| Preparation Example 3 | 2:1 | gel | 85 |
| Preparation Example 4 | 2.5:1 | gel | 82 |
| Preparation Example 5 | 3:1 | Liquid phase | 0 |
| Preparation Example 6 | 5:1 | Liquid phase | 0 |
| Preparation Example 7 | 6:1 | Liquid phase | 0 |
| Preparation Example 8 | 6.5:1 | Liquid phase | 0 |
| Preparation Example 9 | 7 : 1 | gel | 75 |
| Preparation Example 10 | 10:1 | Solid phase | 98.12 |

As seen in Table 1, it was confirmed that a liquid phase, a gel phase, or a solid phase was shown at room temperature depending on a mixing ratio of succinonitrile and LiFSI.

In addition, in the case of a solid phase or a gel phase, it was confirmed that the phase was melted to a liquid phase when heated to 60°C or higher but returned to an original solid or gel phase when cooled to room temperature of lower than 40°C.

It was further confirmed that when LiFSI having different contents was applied in a solid phase on both surfaces of the separator during coating on a separator, and then when heated to 60°C or higher during manufacture of the battery, succinonitrile and LiFSI coated on both surfaces satisfied a specific content ratio as in Preparation Examples 3 to 9 in Table 1, the liquid or gel phase state was maintained even at room temperature.

In addition, as shown in Preparation Examples 3 to 9, it was confirmed that when the phase was a gel or liquid phase at room temperature, a battery capacity at room temperature was expressed.

The present disclosure will be described in more detail by the following examples.

### [Example 1]

### <Preparation of coating solution (1) for forming first functional layer>

50 g of succinonitrile was heated to 60°C and melted to a liquid phase to prepare a coating solution (1).

### <Preparation of coating solution (2) for forming second functional layer>

50 g of succinonitrile was heated to 60°C and melted, and then 50 g of LiFSI was added to prepare a coating solution (2) .

### <Manufacture of hybrid separator>

A polyimide non-woven fabric having a thickness of 20 um and a porosity of 42% was prepared as a porous substrate.

One surface of the polyimide non-woven fabric was coated with the coating solution (1) at 60°C so that a liquid phase was maintained, and then cooling to room temperature and drying were performed to form a first functional layer in a solid state.

In addition, the other surface of the polyimide non-woven fabric was coated with the coating solution (2) at 60°C so that a liquid phase was maintained, and then cooling to room temperature and drying were performed to form a second functional layer in a solid state.

The coating amounts of the first functional layer and the second functional layer were 3.87 g/m².

### <Manufacture of battery>

Manufacture of positive electrode: 94 of LiCoO₂, 2.5 of polyvinyl fluoride, and 3.5 of carbon black were added to N-methyl-2-pyrrolidone (NMP) and stirring was performed to manufacture a positive electrode slurry. An aluminum foil having a thickness of 30 um was coated with the slurry, dried at a temperature of 120°C, and pressed to manufacture a positive electrode plate having a thickness of 150 µm.

Manufacture of negative electrode: 95 of artificial graphite, 3 of Acrylic latex having Tg of - 52°C (Product name: BM900B solid content: 20 wt%), and 2 of carboxymethyl cellulose (CMC) were added to water, and stirring was performed to produce a negative electrode slurry. A copper foil having a thickness of 20 µm was coated with the slurry, dried at a temperature of 120°C, and pressed to produce a negative electrode plate having a thickness of 150 µm.

Manufacture of battery: The positive electrode, the negative electrode, and the hybrid separator manufactured above were assembled in a stacking manner into a pouch type battery, thereby manufacturing a pouch type lithium ion secondary battery of 80 mAh. The manufactured battery was allowed to stand at 60°C for 1 hour and then used.

The physical properties of the manufactured battery were evaluated, and are shown in the following Table 2. In addition, the nail penetration experiment of the battery is shown in Table 3.

### [Example 2]

The process was performed in the same manner as in Example 1, except that the following composition of the coating solution was changed.

### <Preparation of coating solution (1) for forming first functional layer>

50 g of succinonitrile was heated to 60°C and melted into a liquid phase, and mixed with 2.5 g of fluoroethylene carbonate (FEC) to prepare a coating solution (1).

### <Preparation of coating solution (2) for forming second functional layer>

50 g of succinonitrile was heated to 60°C and melted, and then 5 g of fluoroethylene carbonate (FEC) and 50 g of LiFSI were added to prepare a coating solution (2).

### <Manufacture of hybrid separator>

A polyimide non-woven fabric having a thickness of 20 um and a porosity of 42% was prepared as a porous substrate.

One surface of the polyimide non-woven fabric was coated with the coating solution (1) at 60°C so that a liquid phase was maintained, and then cooling to room temperature and drying were performed to form a first functional layer in a solid state.

In addition, the other surface of the polyimide non-woven fabric was coated with the coating solution (2) at 60°C so that a liquid phase was maintained, and then cooling to room temperature and drying were performed to form a second functional layer in a solid state.

The coating amounts of the first functional layer and the second functional layer were 3.87 g/m².

The physical properties of the manufactured battery were evaluated, and are shown in the following Table 2. In addition, the nail penetration experiment of the battery is shown in Table 3.

### [Example 3]

A battery was manufactured in the same manner as in Example 2 except that the content of fluoroethylene carbonate (FEC) in the coating solution (1) and the coating solution (2) was changed as shown in the following Table 2. The physical properties of the manufactured battery were evaluated, and are shown in the following Table 2.

### [Examples 4 to 9]

Batteries were manufactured in the same manner as in Example 2 except that the contents of succinonitrile and LiFSI in the coating solution (1) and the coating solution (2) were changed as shown in the following Table 2. The physical properties of the manufactured batteries were evaluated, and are shown in the following Table 2.

### [Comparative Example 1]

The positive electrode and the negative electrode were manufactured in the same manner as in Example 1.

A polyimide non-woven fabric having a thickness of 20 um and a porosity of 42% was used as a separator between the positive electrode and the negative electrode and a pouch type battery was assembled in a stacking manner. An ethylene carbonate/ ethyl methyl carbonate/ dimethyl carbonate electrolyte solution (volume ratio of 3:5:2) in which 1 M lithium hexafluorophosphate (LiPF₆) was dissolved was injected to the assembled battery to produce a pouch type lithium ion secondary battery having a capacity of 80 mAh. The used electrolyte solution was a liquid phase at room temperature, and the haze was 0% when measured.

The physical properties of the manufactured battery were evaluated, and are shown in the following Table 2. In addition, the nail penetration experiment of the battery is shown in Table 3.

### [Comparative Example 2]

A battery was manufactured in the same manner as in Example 2 except that the contents of succinonitrile and LiFSI in the coating solution (1) and the coating solution (2) were changed as shown in the following Table 2. The physical properties of the manufactured battery were evaluated, and are shown in the following Table 2.

**[Table 2]**

| | Coating application amount (g/m²) ratio (first functional layer: second functional layer) | | Final mixing weight ratio after heating at 60°C for 1 hour (SN: LiFSI) | Total content of FEC (wt%) | DC-IR of battery (mΩ) | | Battery capacity (mAh) |
|---|---|---|---|---|---|---|---|
| | First functional layer (SN: LiFSI 1:0) | Second functional layer (SN: LiFSI 1:1) | | | C_DCIR | D_DCIR | |
| Example 1 | 1 | 1 | 3:1 | 0 | 1373 | 1387 | 25 |
| Example 2 | 1 | 1 | 3:1 | 4.8 | 1152 | 1153 | 78 |
| Example 3 | 1 | 1 | 3:1 | 10 | 1288 | 1291 | 43 |
| Example 4 | 2 | 1 | 5:1 | 4.8 | 1258 | 1260 | 65 |
| Example 5 | 2.5 | 1 | 6:1 | 4.8 | 1255 | 1261 | 61 |
| Example 6 | 2.75 | 1 | 6.5:1 | 4.8 | 1259 | 1263 | 59 |
| Example 7 | 3 | 1 | 7:1 | 4.8 | 1315 | 1321 | 36 |
| Example 8 | 0.5 | 1 | 2:1 | 4.8 | 1358 | 1361 | 30 |
| Example 9 | 0.75 | 1 | 2.5:1 | 4.8 | 1352 | 1360 | 31 |
| Comparative Example 1 | - | - | - | - | 1115 | 1111 | 83 |
| Comparative Example 2 | 0 | 1 | 1:1 | 4.8 | 1445 | 1411 | - |

In Table 2, in Examples 1 to 3 in which the first functional layer and the second functional layer were coated with a solid phase lithium salt with varied contents, was heated at 60°C for 1 hour, and had the same final mixing ratio, it was confirmed that as a result of changing the content of FEC, even Example 1 having no FEC expressed the capacity of a battery measured at room temperature, but more preferably, when the content of FEC was less than 5 wt% as in Example 2, the battery capacity was more improved. In addition, in Example 2, a separate liquid electrolyte was not injected, but an equivalent or similar battery capacity to Comparative Example 1 to which a liquid electrolyte was injected was shown. As seen in Example 3, when the content of FEC was 10%, it was confirmed that the battery capacity was decreased as compared with Example 2.

In addition, as seen in Examples 4 to 9, the composition ratio of the first functional layer was maintained, and the application amount was adjusted so that the final mixing weight ratio was 2:1 to 7:1. As a result, it was confirmed that a battery capacity was expressed, and the battery capacity was higher in a liquid phase than in a gel phase.

However, in Comparative Example 2, it was impossible to confirm the battery capacity at room temperature, and the battery capacity was confirmed in a state of maintaining 60°C.

**[Table 3]**

| Residual capacity (%) | Example 1 | | Example 2 | | Comparative Example 1 | |
|---|---|---|---|---|---|---|
| | Nail penetration experiment | Surface tempera ture (°C) | Explosion | Surface tempera ture (°C) | Nail penetration experiment | Surface temperature (°C) |
| 100 | Unexploded | 40 | Unexploded | 40 | Exploded | 297 |
| 90 | Unexploded | 40 | Unexploded | 40 | Exploded | 326 |
| 80 | Unexploded | 40 | Unexploded | 40 | Exploded | 600 |
| 70 | Unexploded | 40 | Unexploded | 40 | Unexploded | 35 |

As seen in Table 3, Examples 1 and 2 using the hybrid separator according to an exemplary embodiment of the present disclosure did not cause explosion even in a 100% charged state. However, in Comparative Example 1, explosion occurred in a charged state of 80% or more.

A flame was brought into contact with 1 g of the hybrid separator with a small lighter, and then a time from when ignition started to when ignition ended was measured to evaluate flame retardancy. Thereafter, a 1M LiPF₆ carbonate-based electrolyte in the same amount of the coating layer of the hybrid separator was impregnated in the separator substrate identical to the comparative example to proceed with flame retardancy evaluation. At this time, the hybrid separator was not ignited due to the flame retardancy characteristics, and the ignition duration was 0 seconds, but the ignition duration of Comparative Example 1 was 23 seconds.

The hybrid separator according to an exemplary embodiment of the present disclosure may have excellent flame retardancy and provide a safe effect on ignition when short circuit occurs due to penetration.

In addition, since the hybrid separator is not subjected to heat history in a state in which a coating layer is formed by application on each surface of a porous substrate, the coating layer is present as a solid phase, and since the coating layer is in a solid state, the hybrid separator may be wound after its manufacture and may be transported in a wound state during transport. However, in a process of manufacturing a battery using the hybrid separator by facing an electrode and heat pressing, materials coated on each surface of the porous substrate are melted and mixed so that the materials are phase transformed into a single liquid or gel phase having different composition ratios from those of components of each coating layer and act as a flowable electrolyte. Therefore, when a battery is manufactured by laminating the hybrid separator with an electrode and subjecting to thermal history, the phase transformed liquid phase or gel phase may act as an electrolyte, thereby providing an electrochemical device which does not require injection of a separate liquid electrolyte. Since the coating layer used in the hybrid separator has a high flash point and low vapor pressure and does not require injection of a separate liquid electrolyte, battery safety and ignition problems may be prevented from occurring. Therefore, when an electrochemical device such as a battery is manufactured using the hybrid separator, an electrochemical device which may prevent electrical short circuit and resulting ignition and explosion during a nail penetration evaluation not only in a charged state of less than 100% but also in a 100% charged state may be provided.

The coating layer of the hybrid separator may be a solid state at room temperature with no separate thermal history, for example, at 20 to 35°C, but when it is heated, for example, to 35°C or higher, 40°C or higher, 50°C or higher, or 60 to 80°C, it is melted and a material which may be phase transformed into a liquid phase or a gel phase is coated. However, each coating layer coated on both surfaces of the porous substrate has components composition ratios different from each other, and each coating layer is a solid phase at room temperature, for example, 20 to 35°C, but is melted, and is not present as a solid phase any more even at room temperature in a state in which the coating layer coated on each surface is mixed by melting, but present as a liquid phase or a gel phase. Therefore, the hybrid separator itself before battery assembly may be a hybrid separator of a new concept which may be wound into a roll as a solid laminate, is convenient to transport, does not require a process of injecting a separate liquid electrolyte during battery assembly, and may have an improved electrolyte impregnation rate by the coating layer acting as an electrolyte. However, though it is not excluded to manufacture a battery with the hybrid separator and further inject a separate liquid electrolyte, the content of the additional liquid electrolyte may be significantly decreased as compared with the content injected to a conventional battery.

In addition, due to the phase transformation into a liquid phase or a semi-solid gel phase, interface stability between an active material of an electrode and an electrolyte may be secured.

In addition, the hybrid separator according to an exemplary embodiment of the present disclosure and an electrochemical device including the same have high ionic conductivity, excellent process efficiency and interface stability, is resistant to shock, has high heat resistant, and may provide excellent flame retardancy.

According to an exemplary embodiment of the present disclosure, an electrochemical device having improved flame retardancy and penetration safety may be provided, and the coating layer acts as an electrolyte during battery assembly, thereby providing a hybrid separator which allows improvement of an electrolyte impregnation rate and simplification of a manufacturing process and is easily stored and transported, and an electrochemical device including the same.

Hereinabove, although the present disclosure has been described by the specific matters and limited exemplary embodiments in the present disclosure, they have been provided only for assisting the entire understanding of the present disclosure, and the present disclosure is not limited to the exemplary embodiments, and various modifications and changes may be made by those skilled in the art to which the present disclosure pertains from the description.

Therefore, the above description is only an example to which the principle of the present disclosure is applied, and other constitutions may be further included without departing from the scope of the present disclosure.

## Claims

1. A hybrid separator comprising:
a porous substrate,
a solid phase first functional layer comprising a nitrile-based compound alone or a mixture of the nitrile-based compound and a lithium salt on one surface of the porous substrate, and
a solid phase second functional layer comprising a mixture of the nitrile-based compound and the lithium salt on the other surface of the porous substrate,
wherein the first functional layer and the second functional layer have different contents of the lithium salt.

2. The hybrid separator according to claim 1, wherein the first functional layer and the second functional layer cover the surface and pores of the porous substrate.

3. The hybrid separator according to claim 1 or 2, wherein the first functional layer and the second functional layer respectively have a phase transformation capability by originally forming a solid phase at room temperature, but when heated, the solid phase first functional layer and second functional layer are melted, mixed, and phase transformed to form and maintain a liquid phase or a gel phase at room temperature.

4. The hybrid separator according to claim 3,
the liquid phase has a haze of 50% or less, the gel phase has a haze of more than 50% and less than 90%, and the solid phase has a haze of 90% or more, wherein the haze is measured as follows: a phase transformed sample is placed in a quartz cell of 10×40×50 mm and allowed to stand at room temperature for 12 hours, and haze is measured at a distance of 100 mm vertically from a halogen lamp under the conditions of a rated voltage of 12 V and a power consumption of 50 W, using a colorimeter (COH400, Nippon denshoku).

5. The hybrid separator according to one of claims 1 to 4, wherein the nitrile-based compound is a solid at room temperature, or when mixed with the lithium salt, is present as a solid at room temperature, and is a compound including at least one or more -C=N functional groups.

6. The hybrid separator according to claim 5,
wherein the nitrile-based compound which is a solid at room temperature is any one or a mixture of two or more selected from succinonitrile (SN), (3,4-dimethoxyphenyl)acetonitrile, 2-(4-bromo-2-methoxyphenyl)acetonitrile, 2-fluorophenylacetonitrile, 2-chloro-4-fluorophenylacetonitrile, and 4-fluorophenylacetonitrile, and
the nitrile-based compound which is present as a solid at room temperature when mixed with the lithium salt is any one or a mixture of two or more selected from glutaronitrile, adiponitrile, pymellonitrile, suberonitrile, nonandinitrile, sebaconitrile, undecandinitrile, and dodecandinitrile.

7. The hybrid separator according to one of claims 1 to 6, wherein the lithium salt is any one or two or more selected from the group consisting of LiTFSI((CF₃SO₂)₂NLi), LiFSI((SO₂F)₂NLi), (C₂F₅SO₂)₂NLi, LiCl, LiBr, LiI, LiClO₄, LiBF₄, LiB₁₀Cl₁₀, LiPF₆, LiCF₃SO₃, LiCF₃CO₂, LiC₄BO₈, LiAsF₆, LiSbF₆, LiAlCl₄, CH₃SO₃Li, (CF₃SO₂)₃CLi, LiBF₂(C₂O₄), LiAlO₂, and LiN(CₓF₂₊₁SO₂)(C_{y}F_{2y+1}SO₂) in which x and y are natural numbers.

8. The hybrid separator according to one of claims 1 to 7, wherein a total content of the nitrile-based compound used in the first functional layer and the second functional layer is the content at which the liquid phase or the gel phase is maintained at room temperature when mixed with the lithium salt.

9. The hybrid separator according to one of claims 1 to 8,
wherein the first functional layer is formed by impregnation on a first surface of the porous substrate and is formed with a loading amount of 0.5 to 10 g/m², and
the second functional layer is formed by impregnation on a second surface of the porous substrate and is formed with a loading amount of 0.5 to 10 g/m².

10. The hybrid separator according to one of claims 1 to 9, wherein the porous substrate has a thickness of 1 to 80 µm.

11. The hybrid separator according to one of claims 1 to 10, wherein the first functional layer and the second functional layer further include a carbonate-based additive, but limited to a content of less than 5 wt%.

12. An electrochemical device comprising the hybrid separator selected from any one of claims 1 to 11, wherein the hybrid separator is phase transformed, so that the first and second functional layer is present as a liquid phase or a gel phase transformation layer at room temperature, optionally wherein the status of being phase transformed is obtainable by disposition of the first functional layer and the second functional layer included in the hybrid separator, heating for liquefying, mixing, and then cooling to obtain the phase transformed liquid phase or gel phase.

13. The electrochemical device according to claim 12, wherein the electrochemical device has a capacity of 50 mAh or more.

14. A method of manufacturing a hybrid separator, the method comprising:
applying a solid phase nitrile-based compound alone or a solid phase mixture of the nitrile-based compound and a lithium salt in a state of being heated and melted on a first surface of a porous substrate to impregnate it on the surface and into pores, and performing cooling to form a solid phase first functional layer; and
applying the solid phase mixture of the nitrile-based compound and the lithium salt in a state of being heated and melted on a second surface of the porous substrate to impregnate it on the surface and into pores, and performing cooling to form a solid phase second functional layer,
wherein the first functional layer and the second functional layer have different contents of the lithium salt.

15. A method of manufacturing an electrochemical device using a hybrid separator according to claim 14, wherein the first functional layer and the second functional layer are heated to melt the solid phase first functional layer and second functional layer and upon cooling obtain and maintain a liquid phase or a gel phase at room temperature.
